# FASCICULE DE BREVET EUROPEEN

(11) **EP 0 610 123 B1**
(45) Date de publication et mention de la délivrance du brevet: **14.05.1997**
(21) Numéro de dépôt: 94400199.9
(22) Date de dépôt: 31.01.1994
(51) Int. Cl.: G01V 1/30

(54) **Procédé pour améliorer l'estimation, par analyse de focalisation, des vitesses de propagation des ondes sismiques**
Verfahren zur Verbesserung der Schätzung der seismischen Laufzeitsgeschwindigkeit durch Fokussierungsanalyse
Process for improving the estimated seismic propagation velocity by focussing analysis

(30) Priorité: 01.02.1993 FR 9301029
(43) Date de publication de la demande: 10.08.1994
(73) Titulaire: COMPAGNIE GENERALE DE GEOPHYSIQUE, F-91341 Massy Cédex (FR)
(72) Inventeur: Audebert, François, F-75007 Paris (FR)
(74) Mandataire: Schrimpf, Robert

(56) Documents cités:
- GB-A- 2 230 861
- GEOPHYSICS, vol.57, no.12, Décembre 1992, TULSA US pages 1608 - 1622 S. MACKAY ET AL. 'Imaging and velocity estimation with depth-focusing analysis'
- PROCEEDINGS OF THE IEEE, vol.72, no.10, Octobre 1984, NEW YORK US pages 1302 - 1315 GAZDAG ET AL. 'Migration of Seismic Data'
- GEOPHYSICS, vol.54, no.6, Juin 1989, TULSA US pages 718 - 729 K. AL-YAHYA 'Velocity analysis by iterative profile migration'
- GEOPHYSICAL PROSPECTING, vol.37, no.8, Novembre 1989, NETHERLANDS pages 925 - 958 BLACQUIERE ET AL. '3D Table-driven migration'

## Description

La présente invention concerne un procédé de traitement de données sismiques visant à améliorer l'estimation, par l'analyse de focalisation, des vitesses de propagation des ondes sismiques dans le sous-sol.

La prospection sismique consiste, d'une façon générale, à émettre dans le sous-sol, à l'aide d'une ou plusieurs sources sismiques, des ondes sismiques, à enregistrer en surface des données sismiques correspondant aux ondes sismiques réfléchies sur les interfaces géologiques du sous-sol (encore appelées réflecteurs) à l'aide de capteurs de pression (encore appelés géophones ou hydrophones selon que l'on prospecte à terre ou en mer), puis à traiter ces données pour en tirer une information utile sur la géologie du sous-sol.

La ou les sources sismiques et les capteurs de pression sont habituellement disposés en surface le long d'une ligne de prospection (encore appelée section de prospection) en des abscisses régulières dans le cas de la prospection sismique dite 2D et selon les noeuds d'une grille spatiale régulière dans le cas de la prospection sismique dite 3D.

Afin d'obtenir une image fidèle de la géologie du sous-sol, en particulier pour connaître la position en profondeur des réflecteurs, il convient de traiter les données sismiques enregistrées en surface en tenant compte du champ de vitesses de propagation des ondes sismiques dans le sous-sol, notamment des variations latérales et en fonction de la profondeur des vitesses de propagation.

Un traitement habituel des données sismiques, dit migration par l'équation des ondes avant addition et à déport multiple source-capteur (en anglais "multi-offset migration" ou "prestack migration") consiste, de façon schématique et simplifiée à l'extrême, à faire l'hypothèse a priori d'un champ de vitesses de propagation des ondes sismiques dans le sous-sol, puis à calculer, pour tout couple source-capteur disposé en surface, les enregistrements fictifs que l'on obtiendrait au moyen de sources et capteurs fictifs situés à des profondeurs de plus en plus grandes sur le trajet des ondes sismiques émises et reçues par ce couple source-capteur. Dans la pratique, on traite un grand nombre de couples source-capteur situés sur un intervalle connexe d'abscisses sur la section de prospection simultanément et l'enregistrement fictif calculé en un point tient compte de la contribution de toutes les sources sismiques disposées en surface.

L'image du sous-sol est obtenue en appliquant à l'ensemble des enregistrements fictifs des conditions spatiale et temporelle particulières appelées conditions d'imagerie, la condition spatiale correspondant à des sources et capteurs fictifs confondus en des points de même abscisse sur la section de prospection, appelés point d'extrapolation à déport nul et dont les profondeurs respectives sont appelées profondeur d'extrapolation, et la condition temporelle correspondant au temps zéro. Lorsque les conditions spatiale et temporelle sont réalisées en un même point d'extrapolation, ce point est dit point d'imagerie et la profondeur d'extrapolation correspondante est dite profondeur d'imagerie.

La profondeur d'imagerie d'un point d'imagerie correspond, lorsque le champ de vitesses utilisé dans l'extrapolation correspond au champ de vitesses réel, à la profondeur exacte du réflecteur et dans le cas contraire, l'erreur sur le champ de vitesses se répercute en une erreur sur le positionnement en profondeur du point d'imagerie par rapport à la profondeur réelle du réflecteur.

Afin de faciliter l'estimation du champ de vitesses de propagation des ondes sismiques dans le sous-sol, on a proposé, en 1986, notamment dans les articles PRESTACK MIGRATION VELOCITIES FROM DEPTH FOCUSING ANALYSIS 56th Annual International Meeting Society of Exploration Geophysicists, Expanded Abstracts 438-440 et 2D PRESTACK DEPTH MIGRATION IN THE (S-G-W) DOMAIN, 56th Annual International Meeting Society of Exploration Geophysicists, Expanded Abstracts 327-330, de constituer un volume de données de focalisation en conservant les données extrapolées correspondant à un déport nul et à un intervalle de temps non réduit à zéro. Cet intervalle de temps est ensuite converti en erreur dans le positionnement en profondeur des points d'extrapolation à déport nul pour constituer, à abscisse courante sur la section de prospection un panneau de focalisation. En pointant sur les maxima d'énergie de ces panneaux de focalisation, selon une technique connue appelée analyse de focalisation, notamment décrite dans l'article DEPTH FOCUSING ANALYSIS : Practical Applications and Potential Pitfalls, 61th International Meeting Society of Exploration Geophysicists, Expanded abstracts 1222-1225 et la bibliographie citée dans cet article, on peut estimer un nouveau champ de vitesses qui, en réitérant le processus d'extrapolation précité permettra d'obtenir une image de la géologie du sous-sol plus proche de la réalité.

Toutefois, dans les procédés de traitement connus, la conversion de l'intervalle de temps précité en erreur dans le positionnement en profondeur se fait sans tenir compte des variations latérales du champ de vitesses ni du pendage des réflecteurs.

Il est alors difficile de pointer avec une bonne précision sur les maxima d'énergie des panneaux de focalisation de sorte que l'amélioration de l'estimation du champ de vitesses qui en résulte est faible et ne permet pas toujours de justifier le coût des calculs effectués.

La présente invention a pour objet un procédé de traitement des données sismiques qui tienne compte des variations latérales et avec la profondeur du champ de vitesses de propagation des ondes sismiques dans le sous-sol et du pendage des réflecteurs, afin d'améliorer la qualité des panneaux de focalisation constitués, de façon à obtenir une estimation plus précise du champ de vitesses de propagation des ondes sismiques dans le sous-sol. L'invention vise plus particulièrement un procédé de traitement de données sismiques dans lequel on constitue, de façon connue en soi, un volume de données de focalisation à partir de l'extrapolation vers le bas, pour un ensemble de profondeurs d'extrapolation donné, des données sismiques de surface obtenues au moyen d'au moins une source sismique et de capteurs régulièrement disposés en abscisses le long d'une section de prospection.

Les données de focalisation, à ce stade, sont dites données "brutes" de focalisation. Les données brutes de focalisation satisfont par construction à la condition de déport nul. Les produits de l'application du procédé selon l'invention à ces données brutes de focalisation seront dits données "migrées" de focalisation.

Conformément à une caractéristique de l'invention, le procédé comprend les étapes consistant à, pour un sous-ensemble dudit volume de données brutes de focalisation correspondant à une profondeur d'extrapolation donnée et à un intervalle connexe d'abscisses sur la section de prospection :
a) effectuer une migration vers le bas, à déport nul, dudit sous-ensemble de données brutes de focalisation jusqu'à un premier ensemble de profondeurs d'imagerie supérieures à ladite profondeur d'extrapolation et appliquer aux données migrées une condition temporelle choisie pour constituer un premier bloc de données migrées d'analyse de focalisation,
b) effectuer une migration inverse, à déport nul, vers le haut dudit sous-ensemble de données brutes de focalisation jusqu'à un deuxième ensemble de profondeurs d'imagerie inférieures à ladite profondeur d'extrapolation et appliquer aux données migrées une condition temporelle choisie afin de constituer un second bloc de données migrées d'analyse de focalisation,
c) réunir les premier et deuxième blocs de données migrées d'analyse de focalisation obtenus pour chaque profondeur d'extrapolation dudit sous-ensemble afin de constituer un volume de données migrées d'analyse de focalisation,
et construire un panneau de focalisation en extrayant dudit volume de données migrées d'analyse de focalisation un sous-ensemble à abscisse constante, ce panneau de focalisation étant ensuite traité, de façon connue en soi, par analyse de focalisation, en vue d'obtenir une estimation améliorée des vitesses de propagation des ondes sismiques dans le sous-sol.

Les dimensions du volume de données brutes de focalisation sont de préférence la fréquence temporelle, la profondeur d'extrapolation et l'abscisse sur la section de prospection. En variante, les dimensions du volume de données brutes de focalisation peuvent être le temps ou la fréquence temporelle, la profondeur d'extrapolation ou la pseudo-profondeur d'extrapolation et l'abscisse sur la section de prospection, la pseudo-profondeur étant l'équivalent d'une profondeur exprimée en une autre unité, par exemple le temps de trajet vertical.

Les dimensions du volume de données migrées d'analyse de focalisation sont de préférence la profondeur d'imagerie (après migration à déport nul), la profondeur d'extrapolation, et l'abscisse sur la section de prospection.

En variante, les dimensions du volume de données migrées d'analyse de focalisation sont la pseudo-profondeur d'imagerie, la pseudo-profondeur d'extrapolation et l'abscisse sur la section de prospection.

L'extrapolation vers le bas des données sismiques s'effectue avec toute méthode permettant de reconstituer un champ d'ondes à une profondeur donnée à partir d'un champ d'ondes enregistré à la surface à déport multiple. De préférence, l'extrapolation vers le bas des données sismiques s'effectue avec au moins l'une des méthodes figurant dans la liste suivante : Kirchhoff, différences finies, fréquence-nombre d'ondes.

La migration à déport nul des données brutes de focalisation s'effectue avec toute méthode connue de migration à déport nul. De préférence, la migration à déport nul des données brutes de focalisation s'effectue avec l'une au moins des méthodes figurant dans la liste suivante : Kirchhoff, différences finies, fréquence-nombre d'ondes.

D'autres caractéristiques et avantages de la présente invention apparaîtront à la lecture de la description qui va suivre, non limitative de l'invention, et à l'examen du dessin annexé sur lequel :
- les figures 1 à 4 illustrent le principe de la migration par l'équation des ondes dite à déport multiple source-capteur,
- la figure 5 est une représentation schématique d'un volume de données brutes de focalisation,
- la figure 6 est une vue schématique d'une section, à une profondeur d'extrapolation donnée, du volume de données brutes de focalisation représenté sur la figure 5,
- la figure 7 est une vue schématique de la section de la figure 6 migrée vers le bas, conformément au procédé selon l'invention,
- la figure 8 est une vue schématique du volume de données migrées d'analyse de focalisation obtenu par le procédé selon l'invention,
- les figures 9 et 10 représentent respectivement deux panneaux de focalisation obtenus par un procédé connu et par le procédé selon l'invention.

Le procédé de traitement de données sismiques selon la présente invention s'applique plus particulièrement à un volume de données brutes de focalisation qui s'obtient, de façon connue en soi, en extrapolant vers le bas (datuming en anglais) par l'équation des ondes un champ d'ondes sismiques observé en surface, par une méthode appelée migration avant addition à déport multiple source-capteur ("prestack migration" ou "multi-offset migration" en anglais). De préférence, l'extrapolation est effectuée au moyen d'un algorithme différences finies utilisant une approximation paraxiale 45 ou 65° de l'équation des ondes.

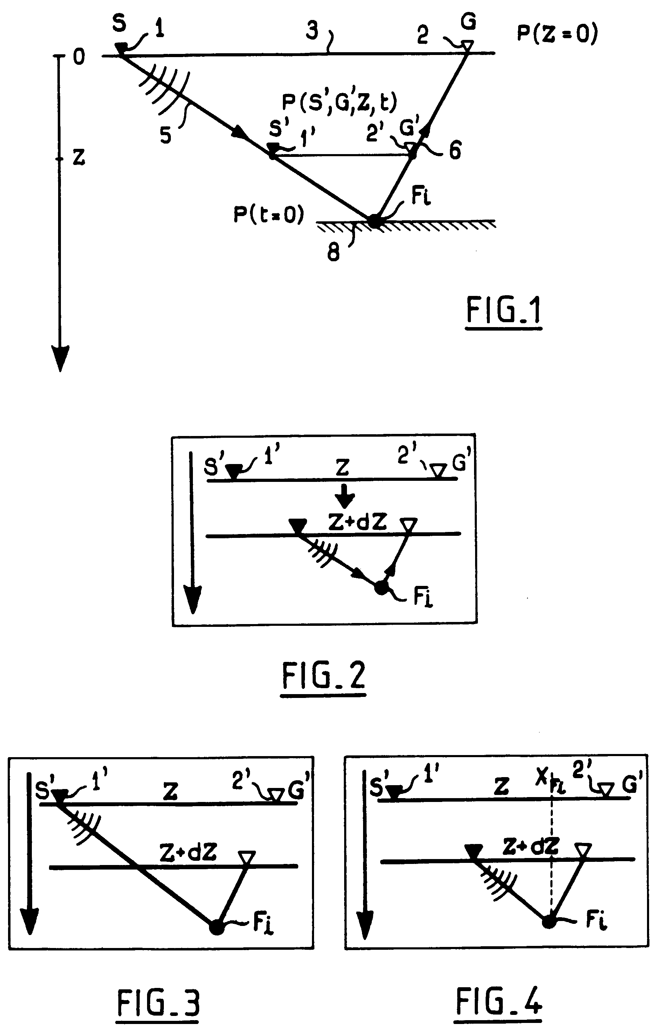

La description qui suit expose de façon très schématique, en référence aux figures 1 à 4, comment est constitué le volume de données brutes de focalisation précité. On se reportera utilement aux publications citées plus haut. L'exposé, afin de faciliter la compréhension de l'invention, se réfère aux dimensions temps (t), abscisse (X) mesurée sur la section de prospection et profondeur d'extrapolation (Z). On préfèrera, dans la pratique, pour faciliter le traitement informatique des données, utiliser les transformées de Fourrier des enregistrements obtenus en surface et travailler ainsi avec la dimension fréquence temporelle au lieu de la dimension temps.

On a désigné par la référence 1 une source sismique qui génère des ondes de pression ou ondes sismiques 5 se propageant vers le bas dans le sous-sol et par la référence 2 un capteur ou géophone à l'aide duquel on enregistre les variations de pression P correspondant aux ondes sismiques 6 réfléchies par un réflecteur 8 du sous-sol. La source 1 et le géophone 2 sont placés à des abscisses respectives S et G sur une ligne ou section de prospection 3, horizontale, qui est prise comme référence pour mesurer les profondeurs Z.

On calcule par l'équation des ondes, pour un couple donné source 1 et capteur 2, en ayant fait a priori l'hypothèse d'un champ de vitesses de propagation des ondes sismiques dans le sous-sol et de proche en proche vers le bas les enregistrements fictifs P(S',G',Z,t) dépendant de la profondeur Z et du temps t, qui seraient obtenus en plaçant une source fictive 1' d'abscisse S' et un capteur fictif 2' d'abscisse G', à la profondeur Z, sur le trajet des ondes sismiques émises en surface par la source 1 d'abscisse S et par le capteur 2 d'abscisse G, comme illustré sur les figures 1 et 2.

Plus particulièrement, le calcul de proche en proche se fait de la façon suivante.

Dans une première étape, illustrée par la figure 3, on calcule l'enregistrement fictif que l'on obtiendrait en plaçant le géophone 2' à la profondeur Z + dZ. Ensuite, comme illustré sur la figure 4, on calcule, en inversant les rôles de la source et du géophone, l'enregistrement fictif que l'on obtiendrait en plaçant la source 1' à la profondeur Z + dZ. Le déport entre les abscisses S' de la source fictive 1' et G' du géophone fictif 2' se réduit progressivement au fur et à mesure que l'on extrapole le champ d'ondes vers le bas, et la source fictive 1' et le géophone fictif 2' se confondent (déport nul S' = G' = X) en un point d'extrapolation, appelé dans la suite point de focalisation à déport nul Fi d'abscisse X_{Fi} sur la section de prospection, situé à une profondeur dite profondeur d'extrapolation, à une condition temporelle particulière (temps t = o). Les conditions (t = o) et (S' = G' = X) sont dites conditions d'imagerie. Si le champ de vitesses de propagation des ondes sismiques utilisé pour le calcul correspond au champ réel, la profondeur du point de focalisation Fi correspond à la profondeur réelle du réflecteur. Dans le cas contraire, la profondeur du point Fi est décalée par rapport à la profondeur réelle du réflecteur.

On constitue des données brutes de focalisation en sauvegardant la partie des enregistrements fictifs satisfaisant à la condition de déport nul dans un intervalle de dimension temporelle non nul autour de zéro. L'ensemble des données de focalisation correspondant aux différentes profondeurs d'extrapolation Ze constitue un volume de données brutes de focalisation.

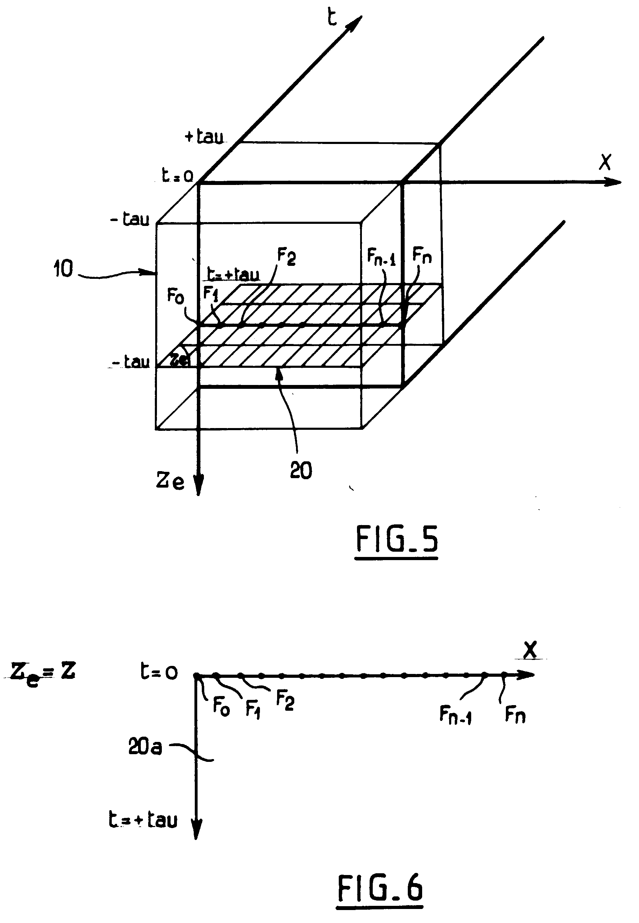

On a représenté, de façon schématique, sur la figure 5 un volume 10 de données brutes de focalisation, obtenu d'une façon connue en soi comme expliqué plus haut. Ce volume de données brutes de focalisation présente une dimension en abscisse X mesurée sur la section de prospection, une dimension profondeur d'extrapolation Zₑ et une dimension temps t.

Le volume 10 de données brutes de focalisation représenté sur la figure 5 a été obtenu, pour une section de prospection donnée et pour un ensemble de profondeurs d'extrapolation Zₑ donné, en gardant la partie des enregistrements fictifs à déport nul pour un intervalle de temps compris entre -tau et +tau P(X, -tau≤ t ≤ +tau, Zₑ). On a désigné par la référence 20 un sous-ensemble de ce volume de données de focalisation correspondant à une profondeur d'extrapolation donnée Zₑ, ce sous-ensemble étant appelé par la suite plan de focalisation à déport nul (connu de l'homme de l'art sous l'anglicisme plan migré zero-offset). Ce plan contient un ensemble de points de focalisation F₀,..., Fᵢ, ..., Fₙ, dits aussi points d'imagerie.

On a représenté sur la figure 6 le demi-plan 20a du sous-ensemble 20 correspondant à la partie des enregistrements fictifs pour des temps supérieurs à zéro mais inférieurs à tau.

L'invention repose sur l'assimilation de l'ensemble des points Fᵢ situés à la profondeur d'extrapolation Zₑ à un ensemble de sources et de capteurs qui seraient confondus et placés en surface selon une ligne horizontale de prospection.

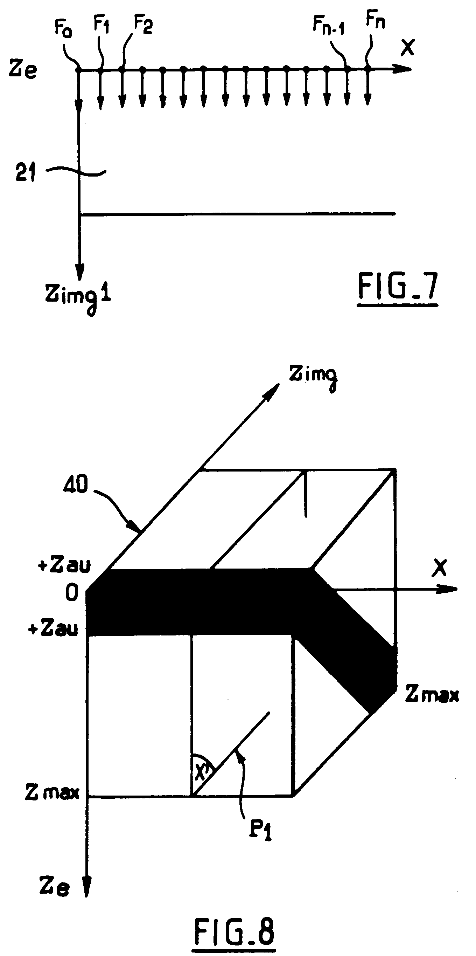

Selon l'invention, on constitue à partir du demi-plan 20a de focalisation à déport nul, comme illustré sur la figure 7, et pour un ensemble connexe de points Fᵢ de focalisation un premier bloc 21 de données migrées d'analyse de focalisation en extrapolant les enregistrements fictifs que l'on obtiendrait en disposant les sources et capteurs à une profondeur supérieure, c'est-à-dire en faisant migrer vers le bas (ou rétropropagation) l'ensemble connexe de points Fᵢ, par une méthode connue de migration à déport nul (connue sous l'anglicisme migration zéro-offset), jusqu'à une profondeur d'imagerie Z_{img1} = Zₑ + Zₐᵤ, supérieure à la profondeur d'extrapolation Zₑ, et en appliquant la condition temporelle t = o aux données ainsi migrées.

Selon l'invention, on constitue un second bloc de données migrées en effectuant une migration inverse vers le haut (propagation), de l'ensemble connexe précité de points F₀, ..., Fₙ jusqu'à une profondeur d'imagerie Z_{img2} = Zₑ - Zₐᵤ inférieure à la profondeur d'extrapolation.

Les deux blocs de données migrées ainsi constitués, sont ensuite réunis et le processus est répété pour un ensemble de profondeurs d'extrapolation Ze afin de constituer un volume de données migrées d'analyse de focalisation que l'on a désigné par la référence 40 sur la figure 8.

Ce volume de données migrées d'analyse de focalisation présente une dimension profondeur d'extrapolation Zₑ (dite aussi profondeur de focalisation), une dimension profondeur d'imagerie Z_{img} et une dimension abscisse X mesurée sur la section de prospection.

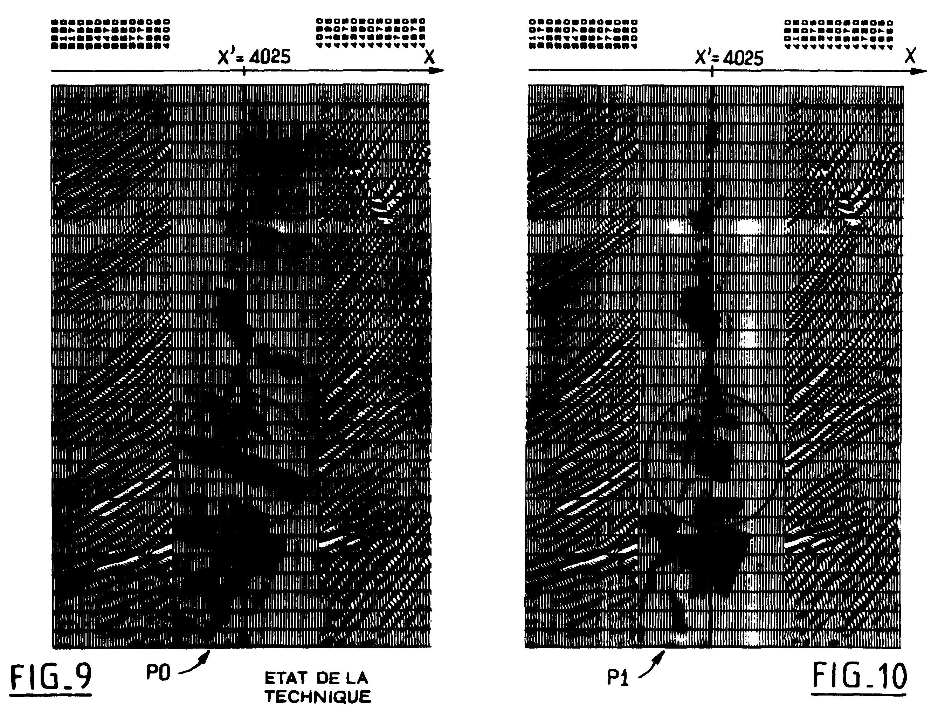

On effectue ensuite une coupe dans un plan à position horizontale constante X' pour constituer un panneau de focalisation P1, et l'on organise, de façon connue, notamment par changement de variable, les données de ce panneau de focalisation pour disposer verticalement en ordonnées la profondeur d'imagerie Z_{img} et horizontalement l'erreur de focalisation e, e = (Z_{img} - Zₑ )/2 comme cela est représenté sur les figures 9 et 10.

La figure 9 représente un exemple de panneau de focalisation P0 obtenu par un procédé connu de l'art antérieur.

La figure 10 représente un exemple de panneau de focalisation P1 obtenu par le procédé selon l'invention.

On a représenté de part et d'autre des panneaux de focalisation P0 et P1 les images du sous-sol correspondant à des abscisses, sur la section de prospection, respectivement inférieures et supérieures à l'abscisse indiquée par les traits verticaux centraux qui indiquent une erreur de positionnement en profondeur nulle sur chacun des panneaux de focalisation d'abscisse X' (les abscisses sont indiquées en mètres). Sur les panneaux de focalisation P0 et P1 on distingue des taches sombres qui correspondent à des amplitudes d'énergie élevée des données sismiques extrapolées.

L'analyse de focalisation consiste à pointer sur les maxima d'énergie des taches figurant sur les panneaux de focalisation pour en tirer une information permettant de corriger l'estimation des vitesses de propagation des ondes sismiques dans le sous-sol, comme cela est connu en soi.

L'homme de l'art comprendra aisément à l'examen comparé des parties cerclées sur ces figures qu'il est plus facile de pointer sur les maxima d'énergie dans le cas du panneau de focalisation obtenu conformément à l'invention, car les taches précitées sont alors moins dispersées par rapport à l'axe central.

Finalement l'invention permet d'améliorer notablement l'estimation des vitesses de propagation des ondes sismiques par migation avant addition et analyse de focalisation en facilitant le pointage sur les maxima d'énergie des panneaux de focalisation.

La description de l'invention a été faite en référence à la prospection sismique dite 2D.

Bien entendu, on ne sort pas du cadre de la présente invention en l'appliquant à la prospection sismique dite 3D. Dans ce cas, l'abscisse X sur la section de prospection est augmentée d'une dimension ordonnée Y.

## Revendications

1. Procédé de traitement de données sismiques dans lequel on constitue, de façon connue en soi, un volume de données brutes de focalisation (10) à partir de l'extrapolation vers le bas, pour un ensemble de profondeurs d'extrapolation donné, des données sismiques de surface obtenues au moyen d'au moins une source sismique (1) et de capteurs (2) régulièrement disposés en abscisses (S, G) le long d'une section de prospection, caractérisé en ce qu'il comprend les étapes consistant à, pour un sous-ensemble (20) dudit volume de données brutes de focalisation correspondant à une profondeur d'extrapolation (Zₑ) donnée et à un intervalle connexe d'abscisses sur la section de prospection :
a) effectuer une migration vers le bas à déport nul, dudit sous-ensemble de données brutes de focalisation jusqu'à un premier ensemble de profondeurs d'imagerie (Z_{img1}) supérieures à ladite profondeur d'extrapolation (Zₑ) et appliquer aux données migrées une condition temporelle choisie afin de constituer un premier bloc de données migrées d'analyse de focalisation,
b) effectuer une migration inverse à déport nul, vers le haut dudit sous-ensemble de données brutes de focalisation jusqu'à un deuxième ensemble de profondeurs d'imagerie (Z_{img2}) inférieures à ladite profondeur d'extrapolation (Zₑ) et appliquer aux données migrées une condition temporelle choisie afin de constituer un second bloc de données migrées d'analyse de focalisation,
c) réunir les premier et deuxième blocs de données migrées d'analyse de focalisation obtenus pour chaque profondeur d'extrapolation (Zₑ) dudit sous-ensemble pour constituer un volume (40) de données migrées d'analyse de focalisation,
et construire un panneau de focalisation (P1) en extrayant dudit volume de données migrées d'analyse de focalisation un sous-ensemble à abscisse constante (X'), ce panneau de focalisation étant ensuite traité, de façon connue en soi, par analyse de focalisation, en vue d'obtenir une estimation améliorée des vitesses de propagation des ondes sismiques dans le sous-sol.

2. Procédé selon la revendication 1, caractérisé en ce que les dimensions du volume (10) de données brutes de focalisation sont la dimension fréquence temporelle (w), la dimension profondeur d'extrapolation (Ze) et la dimension abscisse (X) sur la section de prospection.

3. Procédé selon la revendication 1, caractérisé en ce que les dimensions du volume (10) de données brutes de focalisation sont la dimension fréquence temporelle (w), la dimension profondeur d'extrapolation exprimée en échelle temps vertical, et la dimension abscisse (X) sur la section de prospection.

4. Procédé selon la revendication 1, caractérisé en ce que les dimensions du volume (10) de données brutes de focalisation sont la dimension temps (t), la dimension profondeur d'extrapolation (Zₑ) et la dimension abscisse (X) sur la section de prospection.

5. Procédé selon la revendication 1, caractérisé en ce que les dimensions du volume (10) de données brutes de focalisation sont la dimension temps (t), la dimension profondeur d'extrapolation exprimée en échelle temps vertical, et la dimension abscisse (X) sur la section de prospection.

6. Procédé selon l'une des revendications 1 à 5, caractérisé en ce que les dimensions du volume de données migrées (40) d'analyse de focalisation sont la profondeur d'imagerie, la profondeur d'extrapolation et l'abscisse sur la section de prospection.

7. Procédé selon l'une des revendications 1 à 5, caractérisé en ce que les dimensions du volume de données migrées (40) d'analyse de focalisation sont la profondeur d'imagerie exprimée en échelle temps vertical, la profondeur d'extrapolation exprimée en échelle temps vertical et l'abscisse sur la section de prospection.

8. Procédé selon l'une des revendications 1 à 7, caractérisé en ce que l'extrapolation vers le bas des données sismiques s'effectue avec au moins l'une des méthodes figurant dans la liste suivante Kirchhoff, différences finies, fréquence-nombre d'ondes.

9. Procédé selon l'une des revendications 1 à 8, caractérisé en ce que la migration à déport nul des données brutes de focalisation s'effectue avec l'une au moins des méthodes figurant dans la liste suivante : Kirchhoff, différences finies, fréquence-nombre d'ondes.

10. Procédé selon l'une des revendications 1 à 9, caractérisé en ce que l'abscisse X sur la section de prospection est augmentée d'une dimension ordonnée Y.

## Patentansprüche

1. Verfahren zum Verarbeiten seismischer Daten, bei dem man in für sich bekannter Weise ein Volumen von Fokussierungs-Rohdaten (10) auf der Grundlage einer Extrapolation in die Tiefe für eine vorgegebene Menge von Extrapolationstiefen von seismischen Oberflächendaten bildet, die mit Hilfe von mindestens einer seismischen Quelle (1) und von Aufnehmern (2) gewonnen werden, die regelmäßig hinsichtlich von Abszissen (S,G) entlang einer Prospektionsstrecke angeordnet sind, dadurch **gekennzeichnet**, daß es die folgenden Schritte für eine Untermenge (20) des Volumens von Fokussierungs-Rohdaten umfaßt, die einer gegebenen Extrapolationstiefe (Zₑ) und einem zusammenhängenden Intervall von Abszissen über der Prospektionsstrecke entspricht:
a) Ausführen einer Migration mit Versetzung Null der Untermenge von Fokussierungs-Rohdaten nach unten bis zu einer ersten Menge von Abbildungstiefen (Z_{img1}), die größer als die Extrapolationstiefe (Zₑ) sind, und Anwenden einer gewählten zeitlichen Bedingung auf die migrierten Daten, um einen ersten Block von migrierten Fokussierungsanalysedaten zu bilden,
b) Durchführen einer umgekehrten Migration mit Versetzung Null der Untermenge von Fokussierungs-Rohdaten nach oben bis zu einer zweiten Menge von Abbildungstiefen (Z_{img2}), welche kleiner als die Extrapolationstiefe (Zₑ) sind, und Anwenden einer gewählten zeitlichen Bedingung auf die migrierten Daten, um einen zweiten Block von migrierten Fokussierungsanalysedaten zu bilden,
c) Zusammenfassen des ersten und zweiten Blocks von migrierten Fokussierungsanalysedaten, die man für jede Extrapolationstiefe (Zₑ) der Untermenge erhalten hat, um ein Volumen (40) von migrierten Fokussierungsanalysedaten zu bilden,
und Konstruieren eines Fokussierungsfeldes (P1) durch Extrahieren einer Untermenge mit konstanter Abszisse (X') aus dem Volumen von migrierten Fokussierungsanalysedaten, wobei dieses Fokussierungsfeld danach in für sich bekannter Weise durch eine Fokussierungsanalyse verarbeitet wird, um eine verbesserte Abschätzung der Ausbreitungsgeschwindigkeiten der seismischen Wellen in dem Untergrund zu erhalten.

2. Verfahren nach Anspruch 1, dadurch **gekennzeichnet**, daß die Dimensionen des Volumens von Fokussierungs-Rohdaten (10) die Dimension der zeitlichen Frequenz (w), die Dimension der Extrapolationstiefe (Zₑ) und die Dimension der Abszisse über der Prospektionsstrecke (X) sind.

3. Verfahren nach Anspruch 1, dadurch **gekennzeichnet**, daß die Dimensionen des Volumens von Fokussierungs-Rohdaten (10) die Dimension der zeitlichen Frequenz (w), die Dimension der Extrapolationstiefe, ausgedrückt in der Einheit der vertikalen Zeit, und die Dimension der Abszisse (X) über der Prospektionsstrecke sind.

4. Verfahren nach Anspruch 1, dadurch **gekennzeichnet**, daß die Dimensionen des Volumens von Fokussierungs-Rohdaten (10) die Dimension der Zeit (t), die Dimension der Extrapolationstiefe (Zₑ) und die Dimension der Abszisse (X) über der Prospektionsstrecke sind.

5. Verfahren nach Anspruch 1, dadurch **gekennzeichnet**, daß die Dimensionen des Volumens (10) von Fokussierungs-Rohdaten die Dimension der Zeit (t), die Dimension der Tiefe der Extrapolation, ausgedrückt durch die Einheit der vertikalen Zeit, und die Dimension der Abszisse (X) über der Prospektionsstrecke sind.

6. Verfahren nach einem der Ansprüche 1 bis 5, dadurch **gekennzeichnet**, daß die Dimensionen des Volumens von migrierten Fokussierungsanalysedaten (40) die Abbildungstiefe, die Extrapolationstiefe und die Abszisse über der Prospektionsstrecke sind.

7. Verfahren nach einem der Ansprüche 1 bis 5, dadurch **gekennzeichnet**, daß die Dimensionen des Volumens von migrierten Fokussierungsanalysedaten (40) die Abbildungstiefe, ausgedrückt in der Einheit der vertikalen Zeit, die Extrapolationstiefe, ausgedrückt in der Einheit der vertikalen Zeit, und die Abszisse über der Prospektionsstrecke sind.

8. Verfahren nach einem der Ansprüche 1 bis 7, dadurch **gekennzeichnet**, daß die Extrapolation der seismischen Daten in die Tiefe mit mindestens einem der Verfahren durchgeführt wird, die in der folgenden Liste enthalten sind: Kirchhoff, finite Differenzen, Frequenz-Wellenzahl.

9. Verfahren nach einem der Ansprüche 1 bis 8, dadurch **gekennzeichnet**, daß die Migration mit Versetzung Null der Fokussierungs-Rohdaten mit mindestens einem der Verfahren durchgeführt wird, die in der folgenden Liste enthalten sind: Kirchhoff, finite Differenzen, Frequenz-Wellenzahl.

10. Verfahren nach einem der Ansprüche 1 bis 9, dadurch **gekennzeichnet**, daß die Abszisse X über der Prospektionsstrecke durch eine Ordinatendimension Y ergänzt ist.

## Claims

1. A method of treating seismic data in which, in conventional manner, a volume of raw focusing data (10) is constituted by downwards extrapolation for a given set of extrapolation depths of surface seismic data obtained by means of a seismic source (1) and of sensors (2) regularly disposed along a prospecting section at abscissas (S, G), characterized in that for a subset (20) of said volume of raw focusing data corresponding to a given extrapolation depth (Zₑ) and over a contiguous interval of abscissas along the prospecting section, the method comprises the steps consisting in:
a) performing zero offset downwards migration on said subset of raw focusing data to a first set of imaging depths (Z_{img1}) greater than said extrapolation depth (Zₑ) and applying a selected time condition to the migrated data in order to constitute a first block of focusing analysis migrated data;
b) performing inverse zero offset migration in an upwards direction on said subset of raw focusing data to a second set of imaging depths (Z_{img2}) less than said extrapolation depth (Zₑ), and applying a selected time condition to the migrated data in order to constitute a second block of focusing analysis migrated data;
c) uniting the first and second blocks of focusing analysis migrated data obtained for each extrapolation depth (Zₑ) of said subset in order to constitute a volume (40) of focusing analysis migrated data; and
constructing a focusing panel (P1) by extracting a subset at constant abscissa (X') from said volume of focusing analysis migrated data, said focusing panel subsequently being processed in conventional manner by focusing analysis in order to obtain an improved estimate of seismic wave propagation velocities underground.

2. A method according to claim 1, characterized in that the dimensions of the volume (10) of raw focusing data are the following dimensions: time frequency (w), extrapolation depth (Zₑ), and abscissa (X) along the prospecting section.

3. A method according to claim 1, characterized in that the dimensions of the volume (10) of raw focusing data are the following dimensions: time frequency (w), extrapolation depth expressed as a vertical time scale, and abscissa (X) along the prospecting section.

4. A method according to claim 1, characterized in that the dimensions of the volume (10) of raw focusing data are the following dimensions: time (t), extrapolation depth (Zₑ), and abscissa (X) along the prospecting section.

5. A method according to claim 1, characterized in that the dimensions of the volume (10) of raw focusing data are the following dimensions: time (t), extrapolation depth expressed as a vertical time scale, and abscissa (X) along the prospecting section.

6. A method according to any one of claims 1 to 5. characterized in that the dimensions of the volume (40) of focusing analysis migrated data are: imaging depth, extrapolation depth, and abscissa along the prospecting section.

7. A method according to any one of claims 1 to 5, characterized in that the dimensions of the volume (40) of focusing analysis migrated data are the following: imaging depth expressed as a vertical time scale, extrapolation depth expressed as a vertical time scale, and abscissa along the prospecting section.

8. A method according to any one of claims 1 to 7, characterized in that the downwards extrapolation of the seismic data is performed using at least one of the methods in the following list: Kirchhoff, finite differences, wavenumber-frequency.

9. A method according to any one of claims 1 to 8, characterized in that the zero offset migration of the raw focusing data is performed using at least one of the methods in the following list: Kirchhoff, finite differences, wavenumber-frequency.

10. A method according to any one of claims 1 to 9, characterized in that the abscissa X along the prospecting section is accompanied by an ordinate dimension Y.
